# EUROPEAN PATENT SPECIFICATION

(11) **EP 2 046 592 B1**
(45) Date of publication and mention of the grant of the patent: **11.04.2012**
(21) Application number: 07792228.4
(22) Date of filing: 02.08.2007
(51) Int. Cl.: B60H 3/00

(54) **ELECTROSTATIC ATOMIZING APPARATUS FOR USE IN VEHICLE**
VORRICHTUNG ZUR ELEKTROSTATISCHEN ZERSTÄUBUNG ZUR VERWENDUNG IN EINEM FAHRZEUG
APPAREIL D'ATOMISATION ÉLECTROSTATIQUE POUR UTILISATION DANS UN VÉHICULE

(30) Priority: 04.08.2006 JP 2006213667
(43) Date of publication of application: 15.04.2009
(73) Proprietor: Panasonic Corporation, Osaka 571-8501 (JP)
(72) Inventor: AKISADA, Syousuke, Kadoma-shi Osaka 571-8686 (JP); YANO, Takeshi, Kadoma-shi Osaka 571-8686 (JP); SUGAWA, Akihide, Kadoma-shi Osaka 571-8686 (JP)
(74) Representative: Rocke, Carsten
(86) International application number: PCT/JP2007/065566
(87) International publication number: WO 2008/016180

(56) References cited:
- WO-A-2007/069577
- JP-A- 62 155 122
- JP-A- 2005 289 177
- JP-A- 2006 151 046
- JP-A- 2007 163 109

## Description

### TECHNICAL FIELD

The present invention relates to an electrostatic atomizing apparatus for use in a vehicle.

Vehicles such as passenger cars, of which passenger compartment is a closed space, have such a problem that cigarette smoke and/or other odor fill and stay in the passenger compartment. While this problem is addressed by providing various air purifiers equipped with filters, these air purifiers are not capable of removing odorous substances deposited on the passenger compartment surfaces.

With this regard, much attention has recently been attracted to an electrostatic atomizing apparatus which generates microscopic charged water droplets of nanometer size (nano-sized mist) by atomizing water. The nano-sized mist generated by the electrostatic atomizing apparatus includes radicals such as super oxide radical and hydroxyl radical, which have deodorizing effect and effects of suppressing virus and mold and neutralizing allergens, and therefore this technology is viewed as promising. Emitting the nano-sized mist into the passenger compartment of a vehicle makes it possible to not only remove odor substances suspended in the air of the passenger compartment and remove the odor substances deposited on the passenger compartment walls and the seat surface as well, but also to suppress allergens such as pollen carried into the vehicle by persons having the problematic substances deposited on their wear.

Japanese Unexamined Patent Publication (Kokai) No. 2006-151046 discloses a technology of having air delivered by an onboard air conditioning system carry nano-sized mist so as to disseminate the air-borne nano-sized mist throughout the passenger compartment of the vehicle. With this prior art technology, an electrostatic atomizing apparatus is disposed in an air duct of the air conditioning system. In this electrostatic atomizing apparatus, a discharge electrode to which a high voltage is applied is cooled so to condensate the moisture included in the air, and the condensed water is atomized. However, the electrostatic atomizing apparatus disposed in the air duct of the air conditioning system has such a problem that water cannot be supplied to the discharge electrode when delivering hot air or dry air, thus disabling it to generate nano-sized mist.

Further, the Japanese patent application JP 2005 289 177 A discloses an air conditioner. High voltage electric discharge is applied to air containing a high amount of moisture inside or outside the air conditioner, whereby ions are generated and the ions are made to blow off from a blow-off port of the air conditioner.

The Japanese patent application JP 62 155 122 A discloses an air conditioning device for a car. Air sucked by an intake unit is regulated in temperature at an evaporator, an air mix door and a heater, when passing an air passage part. Then a part of the air is made to blow toward a humidifying passage and the rest is made to flow toward a warm air passage. Warm air running through the warm air passage is diffused to a car cabin via diffusers. On the other hand, the air flowing in the humidifying passage is humidified on a humidifier and then diffused via a humidified air outlet located between the diffusers, thereby mixing the warm air with humidified air immediately after the diffusion thereof.

The European patent application EP 1 980 433 A1 discloses an air conditioning system with an electrostatic atomizing function. The system includes an electrostatically atomizing unit and a ventilation duct which conducts conditioned air. The electrostatically atomizing unit generates a mist of charged minute water particles and is provided with a discharge port which is located adjacent to an air outlet of the ventilation duct. The mist of the charged minute water particles flows into an airflow which is sent from the ventilation duct. The mist of the charged minute water particles spreads to the space by the air flow.

### DISCLOSURE OF THE INVENTION

An object of the present invention is to provide an electrostatic atomizing apparatus for use in a vehicle that solves the problems of the prior art described above.

Another object of the present invention is to provide an electrostatic atomizing apparatus for use in a vehicle that is capable of efficiently generating nano-sized mist by utilizing the air delivered by an onboard air conditioning system.

One aspect of the present invention is an electrostatic atomizing apparatus for use in a vehicle having an air conditioning system equipped with an air duct for delivering air into a passenger compartment, comprising a discharge electrode, an opposite electrode opposed to the discharge electrode, a cooler means that cools the discharge electrode so as to condensate moisture included in the air to thereby deposit the condensed water on a predetermined portion of the discharge electrode, a high voltage power source that applies a high voltage between the discharge electrode and the opposite electrode so as to electrostatically atomize the water that has been condensed on the predetermined portion of the discharge electrode into mist, an outlet port for discharging the mist, a mist introducing pipe connected to the outlet port for introducing the mist into the air duct, and a silencer ring mounted on the mist introducing pipe near the outlet port.

### BRIEF DESCRIPTION OF THE DRAWINGS

Fig. 1 is a schematic diagram showing a constitution of an electrostatic atomizing apparatus according to one embodiment of the present invention.
Fig. 2 is a schematic diagram showing an overall constitution of an air conditioning system incorporating the electrostatic atomizing apparatus.
Fig. 3 is a sectional view along a horizontal plane of the electrostatic atomizing apparatus.
Fig. 4 is a schematic diagram showing a constitution of one modification.
Fig. 5 is a partially exploded perspective view showing another modification.
Fig. 6 is a perspective view showing still another modification.
Fig. 7 is a schematic diagram showing yet another modification.
Fig. 8 is a schematic diagram showing yet another modification.
Fig. 9 is a schematic diagram showing yet another modification.

### BEST MODE FOR CARRYING OUT THE INVENTION

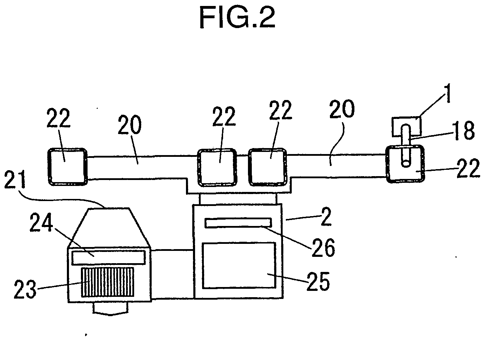

One embodiment of the present invention will be described with reference to the accompanying drawings. In Fig. 2, reference numeral 2 denotes an air conditioning system installed in a vehicle, having an air duct 20 comprising an air conditioner duct. The air duct 20 is terminated by an intake port 21 at one end and is branched into a plurality of channels terminated by outlet ports 22. The intake port 21 is selectively communicated to the outside of the vehicle or to the passenger compartment by means of a switching device (not shown).

Installed in the air duct 20 are a blower fan 23, an air filter 24, an evaporator 25 and a heater 26. As the blower fan 23 operates, air is taken from either the outside of the vehicle or the passenger compartment via the intake port 21 and the air filter 24, and is sent into the air duct 20, so as to be blown out from the outlet port 22 into the passenger compartment.

The evaporator 25 is disposed within a refrigerant circuit along with a compressor and a condenser (not shown) thus forming a refrigeration cycle. As a liquid refrigerant is subjected to heat exchange in the evaporator 25 with air contained in the air duct 20, the air delivered into the passenger compartment is cooled and dehumidified.

The heater 26, provided with an electric pump, is disposed within a heating medium circuit in which engine coolant is circulated. As the heating medium (coolant) heated by the engine is delivered by the electric pump and subjected to heat exchange with the air contained in the air duct 20, the air to be delivered into the passenger compartment is warmed.

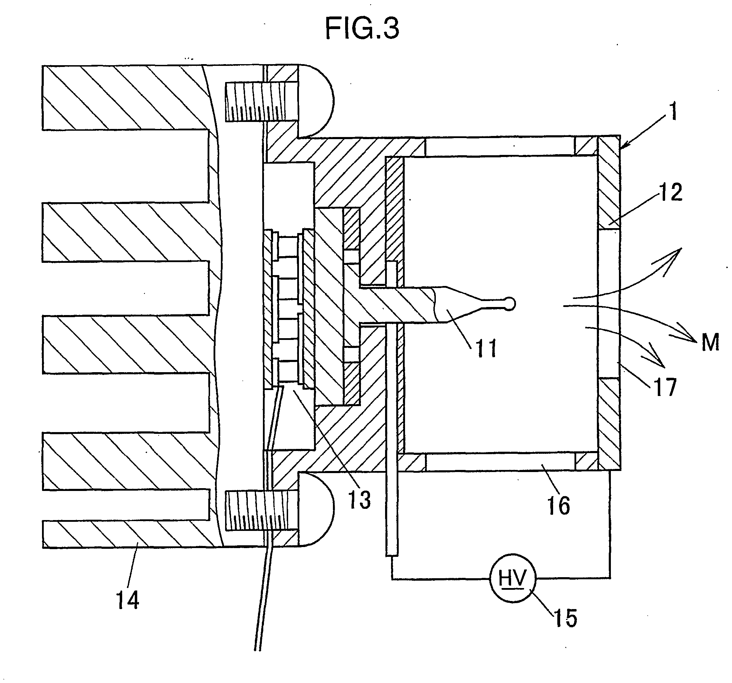

The electrostatic atomizing apparatus 1 which generates microscopic charged water droplets of nanometer size (nano-sized mist) comprises a discharge electrode 11, a cylinder 16 formed from an insulating material to surround the discharge electrode 11, a ring-shaped opposite electrode 12 disposed on an end of the cylinder 16 to oppose the discharge electrode 11, a cooler 13 that cools the discharge electrode 11 so as to condensate moisture included in air and deposit the condensed water on the discharge electrode 11, and a high voltage power source 15 that applies a high voltage between the discharge electrode 11 and the opposite electrode 12, as shown in Fig. 3. The cooler 13 is constituted from a Peltier element of which cooling side is thermally connected to the discharge electrode 11 and heat dissipating side of which has a heat dissipation fin 14.

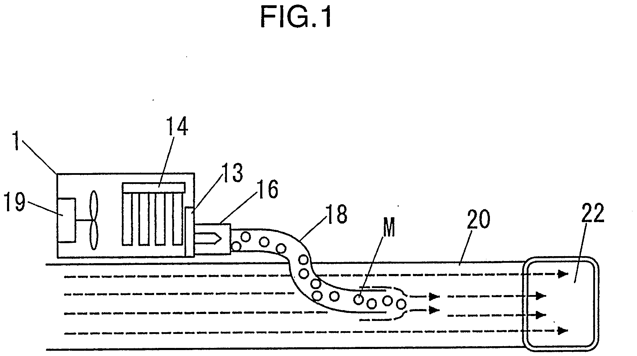

The electrostatic atomizing apparatus 1 has a motor-driven fan 19 that blows cooling air onto the heat dissipation fin 14 as shown in Fig. 1. A part of air propelled by the motor-driven fan 19 enters the cylinder 16 through an opening formed in the circumference of the cylinder 16, and is discharged through an outlet port 17 which is an opening defined in the forward end of the cylinder 16.

In the electrostatic atomizing apparatus 1, moisture included in air is condensed by cooling the discharge electrode 11 by means of the cooler 13 so as to generate condensed water on the discharge electrode 11, while applying a high voltage between the electrodes 11, 12 causes the condensed water to concentrate at the distal end of the discharge electrode 11 and to be repeatedly subjected to Rayleigh disruption caused by discharge between the discharge electrode 11 and the opposite electrode 12 so as to turn into nano-sized mist M and carried by the air propelled by the motor-driven fan 19 to be delivered to the outside through the outlet port 17.

The electrostatic atomizing apparatus 1 is installed outside of the air duct 20 of the air conditioning system 2 as shown in Fig. 1. The mist introducing pipe 18 connected to the outlet port 17 is drawn into the air duct 20 at a position near the vent port 22, with a distal end opening of the mist introducing pipe 18 being directed coward the outside along the air flow direction in the air duct 20.

Since the electrostatic atomizing apparatus 1 is installed outside of the air duct 20, condensed water can be generated so as to generate nano-sized mist M without being influenced by the conditioned air flowing in the air duct 20. The nano-sized mist M introduced via the outlet port 17 and the mist introducing pipe 18 into the air duct 20 is carried by the air flowing in the air duct 20 and diffused through the vent port 22 into the passenger compartment.

At this time, since the distal end opening of the mist introducing pipe 18 is directed toward the vent port 22 along the air flow direction in the air duct 20, there arises no obstruction by the air flow against delivery of the nano-sized mist M from the distal end opening of the mist introducing pipe 18. In the case shown in Fig. 1, in particular, since the distal end opening of the mist introducing pipe 18 is disposed at a radially center of the air duct 20, turbulent flow is less likely to occur in the air flow up to the vent port 22, so that the nano-sized mist is reliably carried by the air in laminar flow and is discharged into the passenger compartment.

The mist introducing pipe 18 is formed from a material which is less likely to be elecrostatically charged. The mist introducing pipe 18 is preferably formed from a flexible and soft material, such as PVC, for the convenience of installing in the vehicle. The mist introducing pipe 18 preferably has smooth inner surface and either straight or gradually curved end portions. In the case where the mist introducing pipe 18 has irregularities on the inner surface or a perpendicular bend midway in the mist introducing pipe 18, stream of the nano-sized mist M within the mist introducing pipe 18 may undergo turbulence which may cause a significant decrease in the quantity of nano-sized mist M discharged from the distal end opening of the mist introducing pipe 18.

The mist introducing pipe 18 preferably has no variation in the cross sectional area from one end to the other, so that nano-sized mist M can be transported efficiently at a uniform velocity. The length of the mist introducing pipe 18 is preferably not longer than 50cm, so that nano-sized mist M does not diminish while flowing in the pipe.

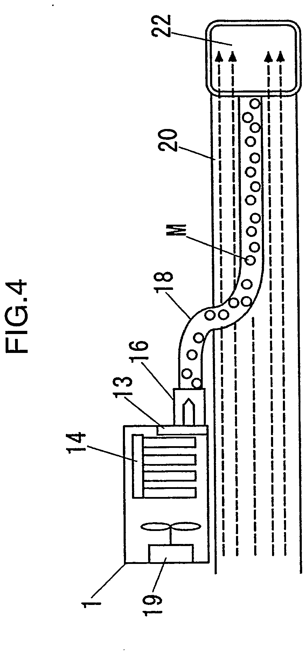

It is made possible to reliably deliver the nano-sized mist M into the passenger compartment without being affected by the velocity of the air flow in the air duct 20, by disposing the distal end of the mist introducing pipe 18 at a position near the vent port 22, as shown in Fig. 4.

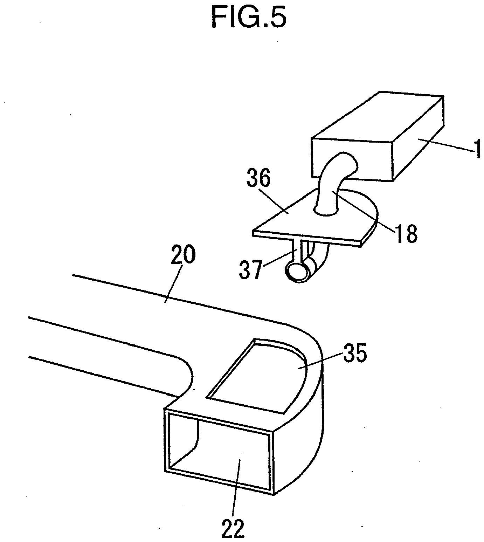

Fig. 5 shows a modification, wherein a junction between a lid 36 that fits into an opening 35 formed in the top wall of the air duct 20 near the vent port 22 and the mist introducing pipe 18 that penetrates through the lid 36, and a strut that supports the distal end of the mist introducing pipe 18 are provided. The strut 37 enables it to dispose the mist introducing pipe 18 at the center of the cross section of the air duct 20 even when the mist introducing pipe 18 is formed from a soft material.

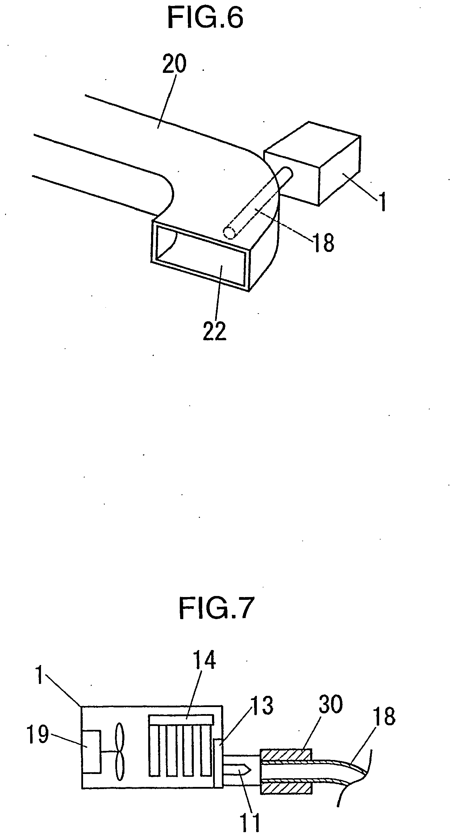

Fig. 6 shows another modification. In this modification, the air duct 20 has a bend near the vent port 22 with the electrostatic atomizing apparatus 1 disposed behind the bend, and the mist introducing pipe 18 is disposed at a radially center of the air duct 20, so as to guide the mist introducing pipe 18 toward the vent port 22 without bending. This configuration enables it to smoothly deliver the nano-sized mist M into the passenger compartment.

Since the electrostatic atomizing apparatus 1 employs electric discharge in the operation, noise is likely to be generated by the electric discharge, and the noise may be transmitted through the vent port 22 to the passenger compartment. This problem is addressed by installing a silencer ring 30 near the outlet port 17 as shown in Fig. 7. The silencer ring 30 is constituted from an outer tube, an inner tube and a sound absorbing material that fills the space between the tubes, and has hole formed in the inner tube. The end portion of the mist introducing pipe 18 is fitted into the inner tube of the silencer ring 30. This constitution suppresses the noise generated by the electric discharge from leaking into the passenger compartment.

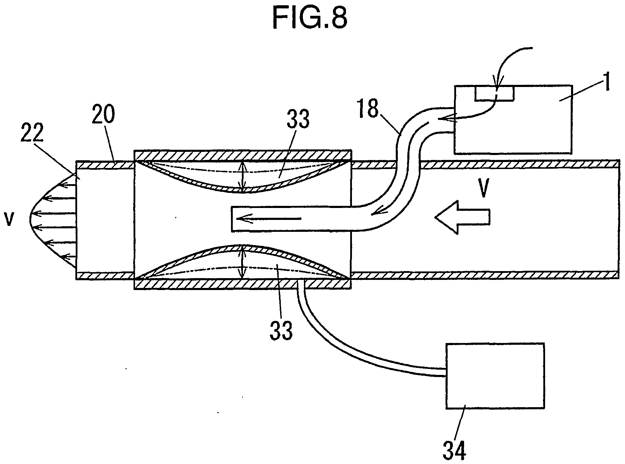

Fig. 8 shows yet another modification. In this modification, the inner diameter of the air duct 20 is made variable in a contractible portion where the distal end opening of the mist introducing pipe 18 is positioned. An air bag 33 formed from rubber or urethane in ring shape is provided to surround the distal end of the mist introducing pipe 18. The air bag 33 is designed to be inflated with air supplied from an air pump 34, so that the inner diameter of the air bag decreases.

The air pump 34 maintains the velocity of air flow discharged from the vent port 22 at a predetermined value (for example, 0.4 m/sec) or higher so as to efficiently disseminate the nano-sized mist M into the passenger compartment, even when the air flow rate is low, by increasing the cross sectional area of the air duct 20 when the air flow rate V generated by the blower fan 23 is high and decreasing the cross sectional area of the air duct 20 when the air flow rate V generated by the blower fan 23 is low.

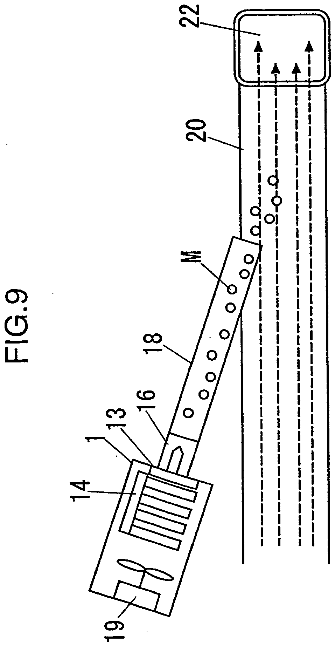

In the embodiment described above, the distal end portion of the mist introducing pipe 18 is disposed parallel to the air duct 20 and positioned at the radially center of the air duct 20. However, the mist introducing pipe 18 may also be introduced obliquely into the air duct 20, as shown in Fig. 9, provided that the distal end opening of the mist introducing pipe 18 is directed toward the vent port 22.

In the embodiment described above, the electrostatic atomizing apparatus 1 is disposed adjacent to one of the plurality of vent ports 22, although the electrostatic atomizing apparatus 1 may be provided in plurality each disposed adjacent to respective one of the plurality of vent ports 22. In the case where only one electrostatic atomizing apparatus 1 is provided, it is preferably disposed near the vent port 22 located in front of the driver's seat. This enables it to surely treat odor and/or allergen, which is carried by the driver into the vehicle, by means of the nano-sized mist M.

As described above, an inventive electrostatic atomizing apparatus is used in a vehicle having an air conditioning system equipped with an air duct for delivering air into a passenger compartment. The electrostatic atomizing apparatus comprises a discharge electrode, an opposite electrode opposed to the discharge electrode, a cooler that cools the discharge electrode so as to condensate moisture included in the air onto a predetermined portion of the discharge electrode, a high voltage power source that applies a high voltage between the discharge electrode and the opposite electrode so as to electrostatically atomize the condensed water deposited on the predetermined portion of the discharge electrode and generate mist, an outlet port for discharging the mist, a mist introducing pipe connected to the outlet port for introducing the mist into the air duct, and a silencer ring mounted on the mist introducing pipe near the outlet port.

By mounting the silencer at a predetermined position in a route from the outlet port through the mist introducing pipe to the air duct, it is made possible to suppress the noise generated by electric discharge.

An outlet end portion of the mist introducing pipe may be preferably suitable to be disposed along an air flow direction in the air duct, and a distal end opening of the mist introducing pipe may be directed toward the vent port of the air duct.

Such a constitution enables it to condensate moisture (generate water) and generate nano-sized mist, without being influenced by the conditioned air flowing in the air duct. It is also made possible to cause the generated nano-sized mist to flow through the air duct and be carried efficiently by the air delivered from the vent port into the passenger compartment.

The distal end opening of the mist introducing pipe may be preferably suitable to be disposed at a radially center of the air duct. When the distal end opening of the mist introducing pipe is disposed substantially at the radially center of the air duct, occurrence of turbulent flow can be suppressed so that sufficient amount of nano-sized mist can be delivered into the passenger compartment.

The mist introducing pipe may be preferably smoothly curved, if any bend portion is required to change the running direction of the mist introducing pipe. Forming the bend of smoothly curved shape enables it to increase the quantity of nano-sized mist supplied through the mist introducing pipe.

The mist introducing pipe may preferably have a constant cross sectional area throughout the entire length. By forming the mist introducing pipe with a constant cross sectional area from one end to the other, it is made possible to transfer nano-sized mist efficiently at a uniform velocity.

The mist introducing pipe is preferably formed from a soft material. By forming the mist introducing pipe from a soft material, it is made possible to dispose the mist introducing pipe easily even when the path from the outlet to the air duct does not lie on a straight line, thus increasing the degree of freedom in determining the position to install the electrostatic atomizing apparatus.

It may be also preferable to provide a support member which is attachable on the air duct and supports the outlet end portion of the mist introducing pipe, which makes it easier to connect the mist introducing pipe.

It may be also preferred that the distal end of the mist introducing pipe is suitable to be disposed at the vent port of the air duct. By disposing the distal end of the mist introducing pipe at the vent port of the air duct, it is made possible to reliably deliver the nano-sized mist reliably into the passenger compartment without being affected by the velocity of the air flow in the air duct.

The distal end opening of the mist introducing pipe may be preferably suitable to be disposed in a contractible portion of the air duct. The contractible portion changes the cross sectional area of the air duct according to the air flow rate. In the case where the cross sectional area of the air duct near the vent port is varied according to the air flow rate, such an air flow velocity that enables it to deliver nano-sized mist throughout the passenger compartment can be always maintained by disposing the distal end opening of the mist introducing pipe in the contractible portion where cross sectional area of the air duct is made variable.

The electrostatic atomizing apparatus does not require water supply. Since the discharge electrode is cooled so as to condensate moisture included in the air and deposit the condensed water onto a portion of the discharge electrode, and the condensed water is electrostatically atomized. Moreover, generation of condensed water and generation of nano-sized mist can be carried out without being influenced by the conditioned air flowing in the air duct. The nano-sized mist thus generated can be carried by the air flowing in the air duct and discharged through the vent port so as to be disseminated into the passenger compartment.

## Claims

1. An electrostatic atomizing apparatus (1) for use in a vehicle having an air conditioning system (2) equipped with an air duct (20) for delivering air into a passenger compartment, comprising:
a discharge electrode (11);
an opposite electrode (12) opposed to the discharge electrode (11);
a cooler (13) that cools said discharge electrode (11) so as to condensate moisture included in the air onto a predetermined portion of the discharge electrode (11);
a high voltage power source (15) that applies a high voltage between said discharge electrode (11) and said opposite electrode (12) so as to electrostatically atomize the condensed water deposited on the predetermined portion of the discharge electrode (11) into mist;
an outlet port (17) for discharging the mist;
a mist introducing pipe (18) connected to the outlet port (17) for introducing the mist into the air duct (20); and
a silencer ring (30) mounted on said mist introducing pipe (18) near the outlet port (17).

2. The electrostatic atomizing apparatus (1) for use in a vehicle according to claim 1, wherein an outlet end (17) portion of said mist introducing pipe (18) is suitable to be disposed along an air flow direction in the air duct (20) and a distal end opening of said mist introducing pipe is suitable to be directed toward a vent port (22) of said air duct (20).

3. The electrostatic atomizing apparatus (1) for use in a vehicle according to claim 2, wherein the distal end opening of said mist introducing pipe (18) is suitable to be disposed at a radially center of said air duct (20).

4. The electrostatic atomizing apparatus (1) for use in a vehicle according to any one of claims 1 to 3, wherein said mist introducing pipe (18) includes a bend portion having a smooth curve.

5. The electrostatic atomizing apparatus (1) for use in a vehicle according to any one of the preceding claims, wherein said mist introducing pipe (18) is made of PVC.

6. The electrostatic atomizing apparatus (1) for use in a vehicle according to any one of claims 1 to 5, wherein said mist introducing pipe (18) has a substantially constant cross sectional area over the entire length.

7. The electrostatic atomizing apparatus (1) for use in a vehicle according to any one of claims 1 to 6, wherein said mist introducing pipe (18) is formed from a soft material.

8. The electrostatic atomizing apparatus (1) for use in a vehicle according to claim 7, further comprising a support member attachable on said air duct (20) for supporting the outlet end (17) portion of said mist introducing pipe (18).

9. The electrostatic atomizing apparatus (1) for use in a vehicle according to any one of claims 1 to 8, wherein the distal end of said mist introducing pipe (18) is suitable to be disposed at the vent port (22) of said air duct (20).

10. The electrostatic atomizing apparatus (1) for use in a vehicle according to any one of claims 1 to 9, wherein the distal end opening of said mist introducing pipe (18) is suitable to be disposed in a contractible portion of said air duct (20), the contractible portion whose cross sectional area is variable according to the air flow rate.

## Patentansprüche

1. Elektrostatische Zerstäubungsvorrichtung (1) bzw. Vorrichtung (1) zur elektrostatischen Zerstäubung zur Verwendung in einem Fahrzeug mit einer Klimaanlage bzw. einem Luftkonditionierungssystem (2), die bzw. das mit einem Luftkanal (20) zum Liefern bzw. Zuführen von Luft in einen Fahrgastraum ausgestattet ist, umfassend:
eine Entladungs- bzw. Sprühelektrode (11);
einen entgegengesetzte bzw. gegenüberliegende Elektrode (12), die der Entladungs- bzw. Sprühelektrode (11) entgegengesetzt ist bzw. gegenüberliegt;
einen Kühler (13), der die Entladungs- bzw. Sprühelektrode (11) kühlt, um Feuchtigkeit, die in der Luft enthalten ist, auf einem vorbestimmten Abschnitt der Entladungs- bzw. Sprühelektrode (11) zu kondensieren;
eine Hochspannungsleistungsquelle (15), die eine hohe Spannung zwischen der Entladungs- bzw. Sprühelektrode (11) und der entgegengesetzten bzw. gegenüberliegenden Elektrode (12) anlegt, um das kondensierte Wasser, das an bzw. auf dem vorbestimmten Abschnitt der Entladungs- bzw. Sprühelektrode (11) angeordnet bzw. abgesetzt ist, elektrostatisch zu Nebel zu zerstäuben;
einen Auslassport bzw. eine Auslassöffnung (17) zum Ausstoßen des Nebels;
ein Nebeleinbringungsrohr (18), das mit dem Auslassport bzw. der Auslassöffnung (17) verbunden ist, um den Nebel in den Luftkanal (20) einzubringen; und
einen Schalldämpferring (30), der an bzw. auf dem Nebeleinbringungsrohr (18) nahe dem Auslassport bzw. der Auslassöffnung (17) montiert ist.

2. Elektrostatische Zerstäubungsvorrichtung (1) zur Verwendung in einem Fahrzeug nach Anspruch 1, wobei ein Auslassende(17)-Abschnitt des Nebeleinbringungsrohrs (18) geeignet ist, entlang einer Luftstromrichtung in dem Luftkanal (20) angeordnet zu sein, und eine Öffnung des distalen Endes des Nebeleinbringungsrohrs geeignet ist, zu einem Entlüftungsport bzw. einer Entlüftungsöffnung (22) des Luftkanals (20) hin gerichtet zu sein.

3. Elektrostatische Zerstäubungsvorrichtung (1) zur Verwendung in einem Fahrzeug nach Anspruch 2, wobei die Öffnung des distalen Endes des Nebeleinbringungsrohrs (18) geeignet ist, an einem radialen Zentrum bzw. einer radialen Mitte des Luftkanals (20) angeordnet zu sein.

4. Elektrostatische Zerstäubungsvorrichtung (1) zur Verwendung in einem Fahrzeug nach einem der Ansprüche 1 bis 3, wobei das Nebeleinbringungsrohr (18) einen Biegungsabschnitt enthält, die eine glatte bzw. sanfte Kurve bzw. Krümmung aufweist.

5. Elektrostatische Zerstäubungsvorrichtung (1) zur Verwendung in einem Fahrzeug nach einem der vorhergehenden Ansprüche, wobei das Nebeleinbringungsrohr (18) aus PVC besteht.

6. Elektrostatische Zerstäubungsvorrichtung (1) zur Verwendung in einem Fahrzeug nach einem der Ansprüche 1 bis 5, wobei das Nebeleinbringungsrohr (18) einen im Wesentlichen konstanten Querschnittsbereich über die gesamte Länge aufweist.

7. Elektrostatische Zerstäubungsvorrichtung (1) zur Verwendung in einem Fahrzeug nach einem der Ansprüche 1 bis 6, wobei das Nebeleinbringungsrohr (18) aus einem weichen Material gebildet ist.

8. Elektrostatische Zerstäubungsvorrichtung (1) zur Verwendung in einem Fahrzeug nach Anspruch 7, ferner umfassend ein Stütz- bzw. Trägerglied, das an dem Luftkanal (20) anbringbar ist, um den Auslassende(17)-Abschnitt des Nebeleinbringungsrohrs (18) zu stützen bzw. zu tragen.

9. Elektrostatische Zerstäubungsvorrichtung (1) zur Verwendung in einem Fahrzeug nach einem der Ansprüche 1 bis 8, wobei das distale Ende des Nebeleinbringungsrohrs (18) geeignet ist, an der Entlüftungsöffnung (22) des Luftkanals (20) angeordnet zu sein.

10. Elektrostatische Zerstäubungsvorrichtung (1) zur Verwendung in einem Fahrzeug nach einem der Ansprüche 1 bis 9, wobei die Öffnung des distalen Endes des Nebeleinbringungsrohrs (18) geeigent ist, in einem zusammenziehbaren Abschnitt des Luftkanals (20) angeordnet zu sein, wobei der Querschnittsbereich des zusammenziehbaren Abschnitts gemäß der Luftstromrate bzw. dem Luftdurchsatz variabel ist.

## Revendications

1. Appareil d'atomisation électrostatique (1) destiné à être utilisé dans un véhicule ayant un système de climatisation (2) équipé d'un conduit d'air (20) pour fournir de l'air dans un habitacle, comprenant :
une électrode émissive (11) ;
une électrode opposée (12) opposée à l'électrode émissive (11) ;
un refroidisseur (13) qui refroidit ladite électrode émissive (11) de manière à condenser l'humidité incluse dans l'air sur une portion prédéterminée de l'électrode émissive (11) ;
une source de puissance haute tension (15) qui applique une haute tension entre ladite électrode émissive (11) et ladite électrode opposée (12) de manière à atomiser de façon électrostatique l'eau condensée déposée sur la portion prédéterminée de l'électrode émissive (11) en une brume ;
un orifice de sortie (17) pour évacuer la brume ;
un tuyau d'introduction de brume (18) connecté à l'orifice de sortie (17) pour introduire la brume dans le conduit d'air (20) ; et
un anneau silencieux (30) monté sur ledit tuyau d'introduction de brume (18) près de l'orifice de sortie (17).

2. Appareil d'atomisation électrostatique (1) destiné à être utilisé dans un véhicule selon la revendication 1, dans lequel une portion d'extrémité de sortie (17) dudit tuyau d'introduction de brume (18) convient à être disposée le long d'une direction d'écoulement d'air dans le conduit d'air (20) et une ouverture d'extrémité distale dudit tuyau d'introduction de brume convient à être dirigée vers un orifice de purge (22) dudit conduit d'air (20).

3. Appareil d'atomisation électrostatique (1) destiné à être utilisé dans un véhicule selon la revendication 2, dans lequel l'ouverture d'extrémité distale dudit tuyau d'introduction de brume (18) convient à être disposée au niveau d'un centre radialement dudit conduit d'air (20).

4. Appareil d'atomisation électrostatique (1) destiné à être utilisé dans un véhicule selon l'une quelconque des revendications 1 à 3, dans lequel ledit tuyau d'introduction de brume (18) inclut une portion de pliage ayant une courbe lisse.

5. Appareil d'atomisation électrostatique (1) destiné à être utilisé dans un véhicule selon l'une quelconque des revendications précédentes, dans lequel ledit tuyau d'introduction de brume (18) est fabriqué en PVC.

6. Appareil d'atomisation électrostatique (1) destiné à être utilisé dans un véhicule selon l'une quelconque des revendications 1 à 5, dans lequel ledit tuyau d'introduction de brume (18) possède une aire en coupe transversale essentiellement constante sur la longueur entière.

7. Appareil d'atomisation électrostatique (1) destiné à être utilisé dans un véhicule selon l'une quelconque des revendications 1 à 6, dans lequel ledit tuyau d'introduction de brume (18) est formé d'un matériau souple.

8. Appareil d'atomisation électrostatique (1) destiné à être utilisé dans un véhicule selon la revendication 7, comprenant en outre un élément de support pouvant être relié sur ledit conduit d'air (20) pour supporter la portion d'extrémité de sortie (17) dudit tuyau d'introduction de brume (18).

9. Appareil d'atomisation électrostatique (1) destiné à être utilisé dans un véhicule selon l'une quelconque des revendications 1 à 8, dans lequel l'extrémité distale dudit tuyau d'introduction de brume (18) convient à être disposée au niveau de l'orifice de purge (22) dudit conduit d'air (20).

10. Appareil d'atomisation électrostatique (1) destiné à être utilisé dans un véhicule selon l'une quelconque des revendications 1 à 9, dans lequel l'ouverture d'extrémité distale dudit tuyau d'introduction de brume (18) convient à être disposée dans une portion pouvant être contractée dudit conduit d'air (20), la portion pouvant être contractée dont l'aire en coupe transversale est variable en fonction de la vitesse d'écoulement d'air.
